(19) Europäisches Patentamt

European Patent Office

Office européen des brevets

(11) **EP 1 955 882 B1**

(12) **EUROPÄISCHE PATENTSCHRIFT**

(45) Veröffentlichungstag und Bekanntmachung des Hinweises auf die Patenterteilung:
**24.11.2010 Patentblatt 2010/47**

(51) Int Cl.:
**B60H 1/32** (2006.01)

(21) Anmeldenummer: **08101473.0**

(22) Anmeldetag: **11.02.2008**

(54) **Verfahren zum Betreiben eines Kältekreislaufs einer Klimaanlage für den Innenraum eines Fahrzeuges**

Method of operating a cooling circuit of an air conditioner for a vehicle interior

Procédé d'opération d'un circuit frigorifique d'un climatisateur pour l'intérieur d'un véhicule

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.02.2007 DE 102007006676**

(43) Veröffentlichungstag der Anmeldung:
**13.08.2008 Patentblatt 2008/33**

(73) Patentinhaber: **Behr-Hella Thermocontrol GmbH**
**70190 Stuttgart (DE)**

(72) Erfinder:
• **Trapp, Dr. -Ing. Ralph**
**33102 Paderborn (DE)**
• **Michalek, David**
**59555 Lippstadt (DE)**
• **Frigge, Dr.-Ing. Michael**
**33102 Paderborn (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**EP-A- 1 101 639     DE-A1- 10 051 582**
**DE-A1- 10 130 412     DE-A1-102005 017 904**

**Beschreibung**

Die Erfindung betrifft ein Verfahren zum Betreiben eines Kältekreislaufs für eine Klimaanlage für den Innenraum eines Fahrzeuges.

Beschreibung des Standes der Technik

Der Kältekreisprozess einer Klimaanlage wird durch komplexe physikalische Vorgänge zwischen dem Kältemittel, der technischen Einrichtung, nämlich dem Kältekreis, und der Umgebung bestimmt. Für die Kraftfahrzeugklimatisierung maßgeblich ist die Kälteleistung des Verdampfers. Einfluss auf die Kälteleistung haben alle äußeren Faktoren, wie die Luftmengen, die über die Wärmeüberträger streichen, und ihr Zustand (im wesentlichen Temperatur und Luftfeuchte), sowie der vom Verdichter geforderten Kältemittelmassenstrom. Auf die Lufttemperatur nach dem Verdampfer und somit die Kälteleistung wird bei Taumelscheibenkompressoren über die Ansteuerung des Kompressorregelventils eingewirkt. Mit Hilfe des Kompressorregelventils wird bei diesen Anlagen direkt oder indirekt der Kompressortriebraumdruck eingestellt. Die Druckverhältnisse zwischen Hoch-, Triebraum- und Niederdruck bestimmen schlussendlich die Stellung der Taumelscheibe und damit das Hubvolumen des Kompressors. Das Hubvolumen bestimmt mit der Ansaugdichte den Kältemittelmassenstrom und hat damit maßgeblichen Einfluss auf die mögliche Kälteleistung des Kältekreislaufes.

**Regelung der Lufttemperatur ausgangsseitig des Verdampfers beim Kältekreis:**

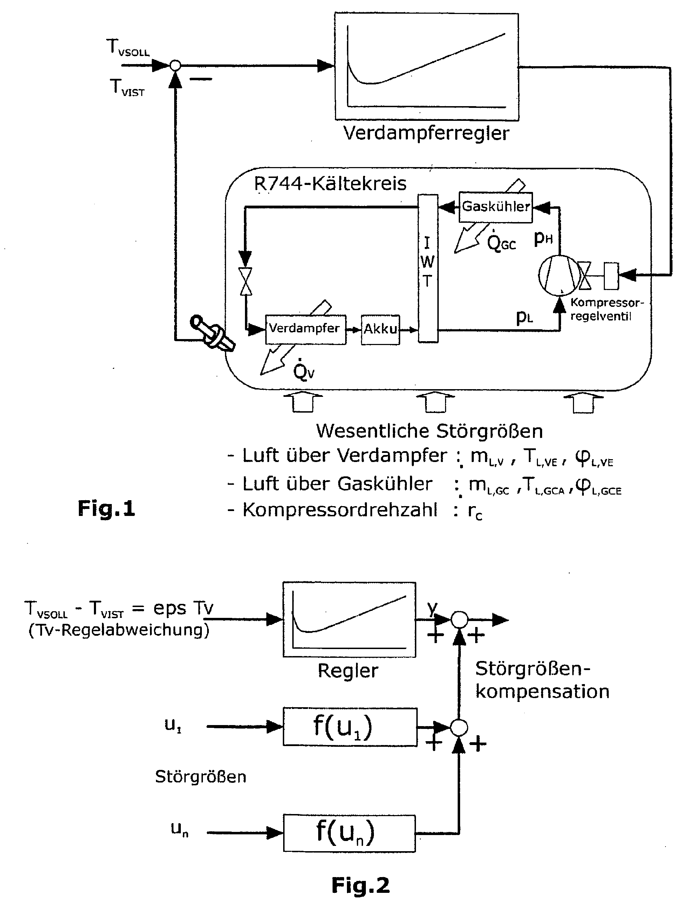

Für die Regelung der Verdampfertemperatur bei einem Kältekreislauf gemäß Fig. 1 ist die Ist-Lufttemperatur nach Verdampfer ($T_{V\,IST}$), d. h. ausgangsseitig des Verdampfers die Regelgröße und die Soll-Lufttemperatur nach Verdampfer ($T_{V\,SOLL}$) die Führungsgröße. Die Stellgröße ist die Kompressorventilansteuerung, welche je nach System ein Strom oder das Puls-Pausen-Verhältnis eines pulsweitenmodulierten Leistungssignals sein kann. Wesentliche Störgrößen bezüglich der Verdampfertemperaturregelung, welche den Zustand des Kältekreises beeinflussen und damit zu Änderungen der Lufttemperatur nach Verdampfer führen, sind die oben genannten Luftmengen über die Wärmeüberträger und ihre Zustände sowie die Kompressordrehzahl. Dabei wird die Soll-Lufttemperatur $T_{V\,SOLL}$ von der der Verdampfertemperaturregelung überlagerten Innenraumtemperaturregelung vorgegeben (siehe z. B. DE-C-199 20 093, in der ein Verfahren zur Vorgabe der optimalen Soll-Lufttemperatur $T_{V\,SOLL}$ beschreiben ist).

Derzeitige Regelstrategien sehen einen einfachen PID-Regler für die Regelung der Lufttemperatur nach Verdampfer vor. Dieser Regler kann je nach Ansteuerung des Kompressorregelventils aus einem alleinigen Regler mit einem PWM-Ausgangssignal und der Regelgrößenabweichung der Verdampfertemperatur als Eingangssignal bestehen oder eine kaskadierte Reglerstruktur mit unterlagertem Stromregler für den Kompressorventilstrom aufweisen. Des Weiteren werden systemkritische Größen wie beispielsweise der Druck (bis zu 130 bar) und die Temperatur des verdichteten Kältemittels über Sensoren beobachtet. Wird eine Grenze (beispielsweise Hochdruck-, Heißgas-, Verdampfervereisungsgrenze, etc.) erreicht, so muss in den Regelkreis eingegriffen werden, wodurch die Reglerstruktur gemäß Fig. 1 verändert wird. Dies kann auf vielfache Weise geschehen, worauf hier jedoch nicht eingegangen werden soll.

Mit dieser Regelungsstrategie ist es grundsätzlich möglich, der Führungsgröße zu folgen und alle Störgrößeneinflüsse nach endlicher Zeit auszuregeln, solange das Kältekreissystem außerhalb eines sicherheitskritischen Zustandes betrieben wird. Da der Störgrößeneinfluss jedoch zum Teil erheblich ist (beispielsweise vom Gebläse gelieferter Luftmassenstrom über den Verdampfer), können deutliche Abweichungen zwischen Regel- und Führungsgröße über einen längeren Zeitraum auftreten. Abhilfe kann die Berücksichtigung der Störgrößen schaffen. Dies setzt jedoch voraus, dass die dominanten Störgrößen nach Tabelle 1 entweder als Vorgabe oder als Messgröße bekannt sind.

Tabelle 1: dominante Störgrößen eines CO2-Kältekreises

| Störgrößen des Kältekreises | Einflussgröße | bekannt / messbar |
|---|---|---|
| Luftmassenstrom über Verdampfer $\dot{m}_V$ | Klimagebläseleistung | Ja (Vorgabe Steuergerät) |
| | Klappenstellung | Ja (Vorgabe Steuergerät) |
| | Fahrzeuggeschwindigkeit | Ja (messbar) |
| Luftmassenstrom über Gaskühler $\dot{m}_{GC}$ | Gaskühlergebläseleistung | Ja (Vorgabe Steuergerät) |
| | Fahrzeuggeschwindigkeit | Ja (messbar) |
| Lufttemperatur vor Verdampfer $T_{L,VE}$ | Umluftklappe (Temperatur Innenraum / Außen) | Ja (bedingt berechenbar) |

(fortgesetzt)

| Störgrößen des Kältekreises | Einflussgröße | bekannt / messbar |
|---|---|---|
| | Kanaltemperaturen | Nein |
| Feuchte vor Verdampfer $\varphi_{L,\text{çE}}$ | Umluftklappe (Feuchte Innenraum / Außen) | Ja (bedingt berechenbar) |
| Kompressordrehzahl* | Motordrehzahl | Ja (messbar) |
| *gilt nur im Volllastfall oder bei Kompressoren ohne Drehzahlkompensation | | |

Für bekannte Störgrößen lässt sich am realen System eine arbeitspunktgebundene Beziehung zwischen jeder Störgröße und der Stellgröße ermitteln. Diese erlaubt gemäß Fig. 2 eine Kompensation des betreffenden Störgrößeneinflusses beispielsweise durch eine additive Aufschaltung auf das Stellgrößensignal. Daraus folgt eine verminderte Regelgrößenabweichung vom Sollwert sowohl im absoluten Betrag als auch akkumuliert über die Zeit. Die Ermittlung der Beziehung zwischen jeder Störgröße und der Stellgröße ist jedoch als recht aufwendig zu bezeichnen.

Aus DE-A-10 2005 017 904 sind als nächstes Stand der Technit ein Verfahren sowie eine Vorrichtung zur Regelung eines Kältemittelkreislaufs einer Klimaanlage für ein Fahrzeug bekannt.

In einem Basisregelkreis wird dabei ein Sollwert für die Verdampfertemperatur vorgegeben, anhand dessen mittels eines Verdampfertemperatur-Reglers eine Stellgröße zur Regelung der Verdampfertemperatur ermittelt wird. Bei diesem Regelungskonzept werden unter anderem auch Störgrößen, wie beispielsweise die Fahrgeschwindigkeit, ausgeregelt.

Ferner ist aus DE-A-100 51 582 eine Fahrzeugklimaanlage mit einem geregelten Kühlmittelkrelslauf bekannt, bei der eine korrigierte Regelung der Verdampfertemperatur über ein Kompressorverdrängersignal, dem ein Korrekturwert aufaddiert wird, erfolgt. Der Korrekturwert ist eine Funktion der Eingangs- und Solltemperatur der Luft sowie der Gebläseleistung.

Aufgabe der Erfindung

Aufgabe der Erfindung ist es, ein Verfahren zum Betreiben eines Kältekreislaufs für eine Klimaanlage für den Innenraum eines Fahrzeugs zu schaffen, bei dem die Störgrößenkompensation und die zu diesem Zweck vorzunehmende Einstellung der Reglerparameter vereinfacht ist. Mit der Erfindung soll also eine Kältekreisregelung mit vereinfachter/verbesserter Störgrößenkompensation vorgeschlagen werden.

Zur Lösung dieser Aufgabe wird mit der Erfindung ein Verfahren zum Betreiben eines Kältekreislaufs für eine Klimaanlage für den Innenraum eines Fahrzeuges gemäß Anspruch 1 vorgeschlagen.

Mit der Erfindung wird vorgeschlagen, die Reglerparameterapplikation durch eine einzige Bezugsgröße für die Störgrößenkompensation und für die Reglerparameter zu vereinfachen. Dies wird erfindungsgemäß erreicht, indem die Verdampferregelung in Fahrzeug-Klimaanlagen durch Bezug der Störgrößenkompensation und der Reglerparameter auf die Kälteleistungsanforderung vereinfacht wird. Wesentlich für die Erfindung ist die Vereinfachung der Regelung durch Zusammenfassung mehrerer Einflussgrößen auf Parameter und Störgrößen, indem eine neue gemeinsame Bezugsgröße wie die Kälteleistungsanforderung oder die Kältekreislast erstellt wird. Hierbei kann die Kältekreislast definiert werden als Produkt aus der Kälteleistungsanforderung und der Wärmeabfuhrmöglichkeit.

Nach der Erfindung wird zunächst die aktuelle Kälteleistungsanforderung ermittelt, und zwar auf Basis sensorisch erfasster und/oder berechneter Umgebungsbedingungen bzw. Betriebsbedingungen wie beispielsweise der Temperatur und der Feuchte der Luft vor dem Verdampfer und dem Durchsatz der Luft durch den Verdampfer. Zu den Betriebs- bzw. Umgebungsbedingungen gehört aber beispielsweise auch die Sonneneinstrahlung, die Fahrzeuggeschwindigkeit und die Motordrehzahl. Die Fahrzeuggeschwindigkeit wirkt sich zusammen mit einem speziellen Gebläse für die Abkühlung des verdichteten Gases ebenso als Störgröße auf die Temperaturregelung des Verdampfers aus, wie die Motordrehzahl, die sich auf die Verdichterdrehzahl auswirkt (gilt nur im Vorlastfall oder bei Verdichtern ohne Drehzahlkompensation).

Die Luftfeuchte wird vorteilhafterweise sensorisch erfasst und/oder berechnet und/oder als Mittelwert mit Gültigkeit für im wesentlichen sämtliche zu erwartende Betriebsfälle abgeschätzt. Die Nutzung einer oder mehrerer Bezugsgrößen, die sich aus den wesentlichen Kältekreisstörgrößen bestimmen lassen, für die Störgrößenkompensation und die variable Parametereinstellung, ist der Kern der Erfindung.

Die Erfindung wird nachfolgend unter Bezugnahme auf die Zeichnung näher beschrieben. Im einzelnen zeigen dabei:

Fig. 1 ein Diagramm des Regelungssystems für die Verdampfertemperatur- regelung eines CO2-Kältekreislaufs,

Fig. 2 eine schematische Darstellung bekannter Verfahren zur Störgrößen- kompensation eines CO2-Kältekreislaufs und

Fig.3 ein Diagramm zur Verdeutlichung der vereinfachten Störgrößenkompensation und variablen Reglerparameterapplikation nach der Erfindung.

Für eine optimale Regelung der Verdampfertemperatur bei Kältekreisen ist es zweckmäßig, die Reglerparameter in Abhängigkeit verschiedener Einflussgrößen wie z. B. der Außentemperatur oder der Luftfeuchte festzulegen. Des Weiteren kann die Regelung bedeutend verbessert werden, wenn Störgrößen wie beispielsweise die Gebläseleistung bei der Regelung in Form einer Störgrößenkompensation berücksichtigt werden. Die Applikation der Reglerparameter und der Störgrößenkompensation für einen Kältekreis kann erfindungsgemäß vereinfacht werden, wenn anstelle der Vielzahl von Einflussgrößen (insbesondere bei kältemittelmassenstromgeregelten CO2-Kältekreisen) eine zentrale Größe, die die dominanten Einflussgrößen in sich vereint, herangezogen wird. Mit der Kälteleistungsanforderung oder Kältekreislast existiert eine Vorgabe, die die wesentlichen Einflussgrößen zusammenfasst und somit als Bezugsgröße für die Reglerparameter und für die Störgrößenkompensation herangezogen werden kann.

Leistungsansatz:

Das physikalische Verhalten eines CO2-(R744-)Kältekreises ändert sich in Abhängigkeit des Arbeitspunktes und der geforderten Last. Die Kältekreislast ergibt sich aus den äußeren Betriebsbedingungen (Außentemperatur, Luftfeuchte, Sonneneinstrahlung, Fahrgeschwindigkeit, Motordrehzahl, etc.), dem angestrebten Arbeitspunkt, der durch den Sollwert der Lufttemperatur nach Verdampfer vorgegeben wird, und dem Zustand des Klimaaggregates, der vom Klimasteuergerät entweder durch ein automatisches Programm oder durch den Benutzerwunsch vorgegeben wird (Klappenstellungen, insbesondere Umluft oder Frischluft und Gebläselelstung).

Aus regelungstechnischer Sicht ändert sich das Streckenverhalten der Regelstrecke (d. h. des Kältekreises), das insbesondere durch die Systemdynamik sowie durch die Streckenverstärkung bestimmt wird. Sowohl die Dynamik als auch die Streckenverstärkung sind über dem Kältekreisbetriebsbereich variabel. Dies führt bei konstanten Reglerparametern zu unterschiedlicher Regelgüte über dem möglichen Betriebsbereich. Für eine optimale Regelung mit einem konventionellen PID-Regler ist es vorteilhaft, das variable Streckenverhalten zu berücksichtigen.

Eine Möglichkeit, den konventionellen Regler dem Streckenverhalten bestmöglich anzupassen, ist es, einen Regler mit variablen an den Arbeitspunkt adaptierten Parametern zu verwenden. Des Weiteren bietet sich die Möglichkeit den Störgrößeneinfluss der nach Tabelle 1 bekannten Störgrößen über eine zentrale Größe bestmöglich zu kompensieren. Die Schwierigkeit besteht in der Wahl einer geeigneten Bezugsgröße für die variablen Reglerparameter sowie für eine allgemeingültige Störgrößenkompensation.

Bei Kältekreissystemen konnte beobachtet werden, dass sich das Systemverhalten mit der aktuellen Leistungsanforderung verändert. Die Kältekreislast scheint eine günstige Bezugsgröße für die allgemeingültige Störgrößenkompensation sowie die variablen Reglerparameter zu sein und lässt sich wie folgt berechnen.

**Berechnung der geforderten Kälteleistung:**

Die Kälteleistung lässt sich über eine Bilanzierung des Verdampfers bei bekanntem Lufteintritts- und Luftaustrittszustand am Verdampfer nach (1) berechnen. Die Enthalpie der ungesättigten feuchten Luft am luftseitigen Verdampfereintritt kann bei Kenntnis der Luftfeuchte sowie der Lufttemperatur nach (2) bestimmt werden. Hier ist anzumerken, dass die Feuchte in der Regel nicht gemessen wird und daher abgeschätzt werden muss. Beispielsweise lässt sich eine mittlere Feuchte definieren, die für die Mehrzahl aller Betriebsfälle gute Ergebnisse liefert. Über die Feuchte der Luft am Verdampfereingang lässt sich die Taupunkttemperatur berechnen. Liegt die berechnete Taupunkttemperatur über der Solltemperatur der Luft nach Verdampfer, so kondensiert beim Abkühlvorgang Wasser aus. Wird davon ausgegangen, dass die Luft mit homogener Temperatur über der Verdampferfläche austritt und den Sollwert der Lufttemperatur nach Verdampfer annimmt, so lässt sich ebenfalls die Enthalpie der feuchten Luft am Verdampferaustritt im Fall der gesättigten feuchten Luft mit Kondensat nach (3) berechnen. Anderenfalls kann die Berechnung der Enthalpie der feuchten Luft nach Verdampfer auch nach Gleichung (2) erfolgen.

$$\dot{Q}_V = \dot{m}_L \left( h_{L,VA} - h_{L,VE} \right) \tag{1}$$

$$h_{L\,VE} = c_{pL}\left(T - T_{tr}\right) + x\left[\Delta h_V\left(T_{tr}\right) + c_{pW}\left(T - T_{tr}\right)\right] \qquad (2)$$

$$h_{L\,VA} = c_{pL}^{0}\left(T - T_{tr}\right) + x_s\left[\Delta h_V\left(T_{tr}\right) + c_{pw}^{0}\left(T - T_{tr}\right)\right] + \left(x - x_s\right)c_{pW}\left(T - T_{tr}\right) \qquad (3)$$

Die gezeigte Berechnung der Verdampferleistung erfordert als Eingangswerte die Luftfeuchte vor Verdampfer und die Temperatur des Luftstromes. Da sich die Luft vor dem Verdampfer im Regelfall als Mischung aus Innenraum- und Frischluft zusammensetzt, kann der Zustand der Mischluft bei bekanntem Mischungsverhältnis, welches im Wesentlichen durch die Umluftklappenstellung vorgegeben wird, bestimmt werden. So ergibt sich die resultierende Wasserbeladung des Luftstromes vor Verdampfer nach (4) aus dem Umluftstrom (Index 1) und dem Frischluftstrom (Index 2). Die Energiebilanz nach (5) kann durch Umstellen nach der Lufttemperatur am Verdampfereintritt aufgelöst werden, womit alle benötigten Größen für die Bestimmung der Kälteleistungsanforderung bekannt sind.

$$x_{L\,VE} = \frac{\dot{m}_1 x_1 + \dot{m}_2 x_2}{\dot{m}_1 + \dot{m}_2} \qquad (4)$$

$$\dot{m}_{L\,VE} h_{L\,VE} = \dot{m}_1 h_1 + \dot{m}_2 h_2 \qquad (5)$$

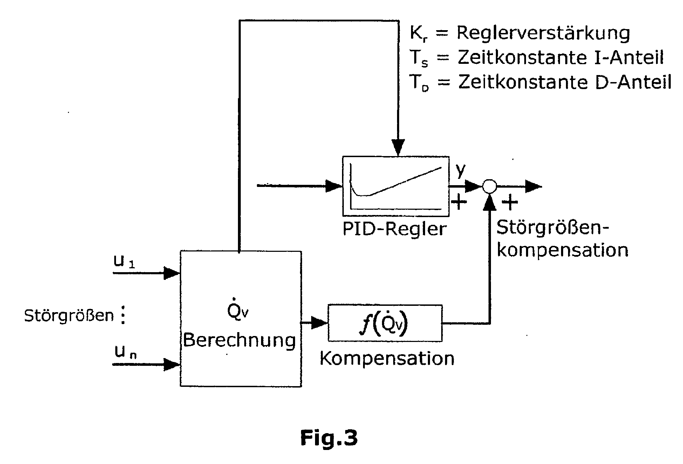

Die berechnete Kälteleistungsanforderung nach (1) lässt sich nun nach Fig. 3 als Bezugsgröße für die vereinfachte Störgrößenkompensation heranziehen. Damit reduziert sich der Aufwand zur Bestimmung der Kompensationsfunktion $f(\dot{Q}_V)$, da nur noch eine Einflussgröße, nämlich die Kälteleistungsanforderung $\dot{Q}_V$, für die Störgrößenkompensation vorliegt. In gleicher Weise wie die Störgrößenkompensation können nun auch die Reglerparameter als Funktion der Kälteleistungsanforderung angegeben werden.

### Nomenklatur:

| Zeichen | Bedeutung | Einheit |
|---|---|---|
| $c_p$ | Isobare Wärmekapazität | $J/(kgK)$ |
| $h$ | spezifische Enthalpie | $J/kg$ |
| $\dot{m}$ | Massenstrom | $kg/s$ |
| $\dot{Q}$ | Wämestrom | $J/s$ |
| $T$ | Temperatur | $K$ |
| $x$ | Wasserbeladung | - |
| $\Delta h(T_{tr})$ | Verdampfungsenthalpie Wasser | $J/kg$ |
| $\varphi$ | Luftfeuchte | |

### Indizes:

| Zeichen | Bedeutung |
|---|---|
| $A$ | Austritt |
| $E$ | Eintritt |
| $L$ | Luft |
| $S$ | Sättigung |
| $tr$ | Tripelpunkt Wasser |
| $V$ | Verdampfer |
| $W$ | Wasser |
| $x$ | Wasserbeladung |
| GC | Gaskühler |

**Patentansprüche**

1. Verfahren zum Betreiben eines Kältekreislaufs für eine Klimaanlage für den Innenraum eines Fahrzeuges, wobei der Kältekreislauf versehen ist mit einem ansteuerbaren Verdichter zum Verdichten eines Kältemittels, einem Expansionsorgan zum Entspannen des Kältemittels und mindestens einem Verdampfer, in dem sich das entspannte Kältemittel zur Abkühlung von den Verdampfer passierender, dem Innenraum des Fahrzeuges zuzuführender Luft befindet, wobei ein Verdampfertemperaturregler, der mindestens einen variablen Reglerparameter wie beispielsweise den Verstärkungsfaktor, die Nachstellzeit und/oder die Vorhaltezeit aufweist, die Temperatur der ausgangsseitig des Verdampfers austretenden Luft durch zwecks Veränderung der Verdichtung des Kältemittels ertolgende Ansteuerung des Verdichters auf einen Sollwert regelt und diese Regelung durch Betriebsbedingungen des Kältekreislaufs, die Störgrößen hinsichtlich der Regelung sind, beeinflusst ist, wobei bei dem Verfahren

   - mittels sensorisch erfasster und/oder berechneter Betriebsbedingungen die Größe der aktuell geforderten Kälteleistung bestimmt wird,
   - die Einflüsse der Störgrößen auf die Regelung der Temperatur der ausgangsseitig des Verdampfers austretenden Luft auf der Grundlage der Größe der aktuell geforderten Kälteleistung oder der Kältekreislast kompensiert werden und
   - der mindestens eine variable Reglerparameter des Verdampfertemperaturreglers in Abhängigkeit von der Größe der aktuell geforderten Kälteleistung vorgegeben wird.

2. Verfahren nach Anspruch 1, **dadurch gekennzeichnet, dass** die Betriebsbedingungen die Temperatur, die Feuchte und der Durchsatz der dem Verdampfer zuzuführenden Luft und vorzugsweise auch die Sonneneinstrahlung, die Fahrzeuggeschwindigkeit und die Motordrehzahl sind.

3. Verfahren nach Anspruch 2, **dadurch gekennzeichnet, dass** die Luftfeuchte sensorisch erfasst und/oder berechnet und/oder als Mittelwert mit Gültigkeit für im wesentlichen sämtliche zu erwartenden Betriebsfälle abgeschätzt wird.


**Claims**

1. Method of operation of a cooling circuit of an air conditioning system for the interior of a vehicle, the cooling circuit being provided with a controllable compressor for compressing a cooling medium, an expansion member for the expansion of the cooling medium, and at least one evaporator in which the expanded cooling medium is present for the cooling of air that passes through the evaporator to be supplied to the interior of the vehicle, wherein an evaporator temperature control which has at least one variable control parameter, such as the amplification factor, the reset time and/or the hold-back time, controls the temperature of the air leaving from the outlet of the evaporator to a set value by controlling the compressor such that a change in the compression of the cooling medium is achieved, and wherein this control is influenced by operating conditions of the cooling circuit that are disturbance variables with respect to the control, wherein in the method

   - the magnitude of the currently required cooling capacity is determined by means of detected and/or calculated operating conditions,
   - the influences of the disturbance variables on the control of the temperature of the air leaving from the outlet of the evaporator are compensated on the basis of the magnitude of the currently required cooling capacity or the cooling circuit load, and
   - the at least one variable control parameter of the evaporator temperature control is predetermined as a function of the magnitude of the currently required cooling capacity.

2. Method of claim 1, **characterized in that** the operating conditions are the temperature, the humidity and the throughput of the air to be supplied to the evaporator, and preferably also the solar radiation, the vehicle speed and the engine speed.

3. Method of claim 2, **characterized in that** the air humidity is detected and/or calculated and/or estimated as a mean value valid for substantially all operating situations to be expected.

**Revendications**

1. Procédé d'opération d'un circuit frigorifique d'un climatiseur pour l'intérieur d'un véhicule, ledit circuit frigorifique étant prévu d'un compresseur commandable pour comprimer un agent frigorifique, un moyen d'expansion pour l'expansion dudit agent frigorifique, et au moins un évaporateur dans lequel se trouve l'agent frigorifique pour refroidir l'air passant ledit évaporateur et à alimenter à l'intérieur du véhicule, un régulateur de température de l'évaporateur, qui comprend au moins un paramètre de régulateur comme pour exemple le facteur d'amplification, le temps de rajustage et/ou le temps de rétention, régulant la température de l'air échappant de la sortie de l'évaporateur par commandant le compresseur à une valeur de consigne afin de changer la compression dudit agent frigorifique, et ladite régulation étant influencée par des conditions d'opération dudit circuit frigorifique, qui sont des perturbations au niveau de la régulation, dans lequel procédé

   - la valeur de la capacité frigorifique actuellement nécessaire est déterminée en se basant sur des conditions d'opération détectées et/ou calculées,
   - les influences des perturbations sur la régulation de la température de l'air échappant de la sortie dudit évaporateur sont compensées en se basant sur la valeur de la capacité frigorifique actuellement nécessaire ou de a charge du circuit frigorifique, et
   - ledit au moins un paramètre de régulateur variable duit régulateur de température de l'évaporateur est fixé en fonction de la valeur de la capacité frigorifique actuellement nécessaire.

2. Procédé selon la revendication 1, **caractérisé en ce que** les conditions d'opération sont la température, l'humidité et le débit d'air à alimenter audit évaporateur, et, de préférence, le rayonnement de soleil, la vitesse du véhicule et la vitesse de rotation du moteur.

3. Procédé selon la revendication 2, **caractérisé en ce que** l'humidité est détectée et/ou calculée et/ou estimée comme valeur moyenne valable pour sensiblement toutes situations d'opération à attendre.

**Fig.1**

Wesentliche Störgrößen
- Luft über Verdampfer : $m_{L,V}$ , $T_{L,VE}$ , $\varphi_{L,VE}$
- Luft über Gaskühler : $m_{L,GC}$ , $T_{L,GCA}$ , $\varphi_{L,GCE}$
- Kompressordrehzahl : $r_c$

$T_{VSOLL} - T_{VIST} = eps\ Tv$
(Tv-Regelabweichung)

Regler

Störgrößen-kompensation

$f(u_1)$

Störgrößen

$f(u_n)$

**Fig.2**

$K_r$ = Reglerverstärkung
$T_s$ = Zeitkonstante I-Anteil
$T_D$ = Zeitkonstante D-Anteil

**Fig.3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19920093 C
- DE 102005017904 A
- DE 10051582 A